# EUROPÄISCHE PATENTANMELDUNG

(11) **EP 4 840 896 A1**
(43) Veröffentlichungstag der Anmeldung: **18.11.2026**
(21) Anmeldenummer: 25175751.4
(22) Anmeldetag: 12.05.2025
(51) Int. Cl.: C08G 77/06, C08G 77/08, C08K 3/22, C08K 3/36, C09D 5/16, C09D 183/04

(54) **ZUSAMMENSETZUNG ZUR VERSIEGELUNG UND BESCHICHTUNG VON KANTEN UND/ODER FASEN VON WERKSTOFFPLATTEN**

(71) Anmelder: Flooring Technologies Ltd., Kalkara SCM1001 (MT)
(72) Erfinder: Lehnhoff, Ingo, 18347 Dierhagen (DE); Huhn, Conrad, 16909 Wittstock/Dosse OT Groß Haßlow (DE); Bollner, Andre, 6122 Menznau (CH); Hasch, Joachim, 10317 Berlin (DE); Gier, Andreas, 66399 Mandelbachtal (DE)
(74) Vertreter: Maikowski & Ninnemann Patentanwälte Partnerschaft mbB

(57) **Zusammenfassung**

Die vorliegende Erfindung betrifft eine Zusammensetzung zur Versiegelung und Beschichtung von Fügekanten von Trägerplatten umfassend mindestens eine Verbindung der allgemeinen Formel (I) **R¹SiX₃,** wobei X Alkoxy-, Aryloxy-, Acyloxy- ist, und R¹ ein organischer Rest ist ausgewählt aus der Gruppe umfassend C₅ - C₂₅ Alkyl, und mindestens eine Verbindung der allgemeinen Formel (II) **R²₂SiX₂,** wobei X Alkoxy-, Aryloxy-, Acyloxy ist, und R² ein nichthydrolysierbarer organischer Rest R² ist ausgewählt aus der Gruppe umfassend C1-C4 Alkyl.

## Beschreibung

Die vorliegende Erfindung betrifft eine Zusammensetzung zur Beschichtung und Versiegelung von Kanten und/ oder Fasen von Werkstoffplatten, insbesondere Holzwerkstoffplatten, die Herstellung dieser Zusammensetzung sowie Holzwerkstoffplatten mit dieser Zusammensetzung.

### Beschreibung

Fußbodenpaneele mit Feder-Nut-Profilen an den Seitenkanten zur Verlegung zu Paneelverbünden, wie Laminatfußböden, sind weit verbreitet und herkömmlich bekannt. Die Feder-Nut-Profile ermöglichen eine einfache Verlegung von Fußbodenpaneelen zu Fußbodenbelägen. Solche Fußbodenbeläge können zum Beispiel aus Holzfaserplatten, Spanplatten oder Kunststoffplatten bestehen. Meistens sind die Fußbodenpaneele mit einer Dekorschicht und einer abriebfesten Oberflächenschicht versehen.

Derartige Feder-Nut-Profile weisen in einer ersten Seitenkante eine Feder (oder Zunge) mit einer oberhalb der Feder vorgesehenen (ersten) Fügefläche auf und in einer zweiten Seitenkante eine Nut mit einer Lippe mit einer (zweiten) Fügefläche auf. Beim Verlegen der Paneele werden Feder und Nut ineinandergesteckt oder geklickt, so dass es zum Kontakt der ersten und zweiten Fügefläche kommt. Dieser Ansatz bedingt jedoch einen Spalt auf der Oberseite der zusammengefügten Paneele, und hier insbesondere an den Kontaktpunkten der Fügeflächen der beiden sich gegenüberliegenden Seitenkanten von zwei zusammengefügten Fußbodenpaneelen, durch welchen Feuchtigkeit und Schmutz zwischen die Fußbodenpaneele eindringen kann.

Zur Verringerung des Eindringens von Wasser an den Kontaktpunkten der Feder-Nut-Profile weisen moderne Klickprofile zusätzlich im Bereich der Fügekante einen Falz auf. Unter einem Falz ist ein Absatz, eine Kante oder eine Faltung zu verstehen.

Auch haben sich als sehr populär Laminatböden mit so genannten V-Fugen erwiesen. Eine V-Fuge entsteht, wenn die Kanten der Holzpaneele mit einer Fase oder Abschrägung versehen werden. Bei den Fasen handelt es sich um schräge Abfräsungen an den Seitenkanten, die beim Zusammenfügen der Fußbodenpaneele eine Fuge mit einem V-förmigen Winkel ausbilden. Die Fugenbildung dient dazu, den visuellen Eindruck von einzelnen Paneelen zu verstärken und eine optische Trennung zwischen den Platten zu erzeugen. Problematisch ist auch im Falle der V-Fuge, dass Feuchtigkeit sich in der Fuge ansammeln kann und diese Feuchtigkeit in den Spalt zwischen den Paneelen eindringen kann.

Weiterhin haben sich auch Laminatböden mit so genannten gepressten Fugen etabliert. Eine gepresste Fuge entsteht, wenn die Kanten der Paneele während des Beschichtungsschrittes in der Presse geformt werden, so dass diese als Fase oder Radius mit durchgehender Beschichtung ausgebildet werden. Die Fasen oder Radien werden während der Formatierung so herausgearbeitet, dass diese an den Seitenkanten, die beim Zusammenfügen der Fußbodenpaneele eine Fuge mit einem V-förmigen Winkel oder einem bogenförmigen Radius ausbilden. Die Fugenbildung dient dazu, den visuellen Eindruck von einzelnen Paneelen zu verstärken und eine optische Trennung zwischen den Platten zu erzeugen. Problematisch ist auch im Falle der gefasten oder der abgerundeten Fuge, dass Feuchtigkeit sich in der Fuge ansammeln kann und diese Feuchtigkeit in den Spalt zwischen den Paneelen eindringen kann.

All diese Verbindungsvarianten von Paneelen weisen jedoch nach wie vor einen nur unzureichenden Schutz vor Eindringen von Wasser an der Verbindungs- bzw. Kontaktstelle auf. Dies ist dadurch bedingt, dass bei diesen Produkten durch die feinen Fugen bzw. Spalten zwischen den Fußbodenpaneelen über Kapillarkräfte Wasser (z. B. bei der Reinigung) in den Profilbereich gesaugt wird und dort für Anquellungen sorgt. Zur Prüfung dieses Problems wurde der sogenannte NALFA-Test entwickelt, der zwischenzeitlich auch in der DIN EN ISO 4760 normativ geregelt wurde. Hier wird eine definierte Menge Wasser im Verbindungsbereich dreier verlegter Dielenabschnitte aufgebracht . Nach einer definierten Prüfzeit (24 h) wird analysiert, ob noch Wasser auf der Oberfläche vorhanden ist, Wasser in das Profil eingedrungen ist, durch das Profil auf die Unterseite gelangt ist und, ob eine deutlich sichtbare Quellung der Dielen erkennbar und messbar ist.

Zur Minderung von Feuchteschäden werden bisher verschiedene Strategien einzeln oder in Kombination angewendet. Die einfachste Möglichkeit, das Eindringen von Feuchtigkeit in das Profil zu erschweren, besteht darin, eine möglichst stramme Passung in der Nut- und Federverbindung zu erreichen. Dies kann allerdings zu einem erschwerten Zusammenfügen der Elemente oder dem Auftreten von Beschädigungen beim Verlegen führen. Diese Methode hat zudem den Nachteil, dass, wenn Wasser in den Nut- und Federbereich eingedrungen ist, der Holzwerkstoffträger normal quillt.

Eine weitere Möglichkeit ist die Versiegelung des Profils mit Hydrophobierungsmitteln. So wird in der WO 2006/038867 die Verwendung von Wachsen zur Beschichtung der Kanten beschrieben, wobei zumindest ein teilweises Eindringen des Wachses in das Holzwerkstoffmaterial zu beobachten ist. Aus der EP 903451 A2 ist die Verwendung von Diphenylmethandiisocyanat zur Behandlung der Kanten entnehmbar, das leicht in den Holzwerkstoff penetriert. In der WO 2008/078181 A1 wird wiederum ein fluoriertes Polymer, z.B. Perfluoroalkyl-Methacryl-Copolymer als Beschichtungsmittel verwendet, wobei das schichtbildende Material bei Raumtemperatur fest ist. Der Nachteil dieser Versiegelungsmittel besteht insbesondere darin, dass diese häufig bereits bei der Applikation in den Holzwerkstoffträger wandern und damit der Hydrophobierungseffekt minimiert wird. Dies kann aber auch nachträglich erfolgen, sodass der Effekt in der Nutzung langsam verloren geht. Zudem sind Perfluoro-Verbindungen unter Umweltgesichtspunkten als kritisch einzustufen.

Weitere Kantenversiegelungsmittel basieren auf Mischungen aus verschiedenen substituierten Silanen. So wird in der WO 2020/016176 A1 eine Zusammensetzung aus hydrophoben und hydrophilen Silanen in Kombination mit einer Polymerdispersion zur Versiegelung von Kanten von Holzwerkstoffplatten beschrieben. Die in der WO 2024/121003 A1 beschriebene silanhaltige Zusammensetzung enthält zusätzlich noch Fasenfarbe, die zur Versiegelung von Fasen und Fugen geeignet ist. Die in WO 2024/170287 A1 beschriebene Zusammensetzung enthält neben den Silanen und der Polymerdispersion ein Quellungsmittel. Bei den angeführten silanhaltigen Zusammensetzungen handelt es sich um wässrige Systeme, deren Viskosität und Fließfähigkeit durch die Zugabe von Polymerdispersion, Quellungsmittel und ggfs. Fasenfarbe gezielt einstellbar ist. Es hat sich jedoch gezeigt, dass diese Zusammensetzungen nur bedingt in schnelllaufenden Fertigungslinien einsetzbar sind.

Der vorliegenden Erfindung lag somit die Aufgabe zugrunde, die angeführten Nachteile zu überwinden. Insbesondere lag der Erfindung die technische Aufgabe zu Grunde, ein Kantenversiegelungsmittel zur Verfügung zu stellen, das sowohl eine Versiegelung des Kanten- und Fasenbereichs gegenüber aufliegendem Wasser erzeugt, und gleichzeitig schnell trocknet und einen Auftrag in schnelllaufenden Fertigungslinien ermöglicht.

Diese Aufgabe wird erfindungsgemäß durch eine Zusammensetzung mit den Merkmalen des Anspruchs 1 gelöst.

Entsprechend wird eine wässrige Zusammensetzung zur Versiegelung und Beschichtung von Fügekanten bzw. Fügeflächen von Trägerplatten, insbesondere zur Verwendung in Fußbodenpaneelen, bereitgestellt, wobei die Zusammensetzung folgendes umfasst:
- mindestens eine Verbindung der allgemeinen Formel (I)

   **R¹SiX₃** **(I)**,

   wobei
   - X Alkoxy-, Aryloxy-, Acyloxy- ist, und
   - R¹ ein organischer Rest ist ausgewählt aus der Gruppe umfassend C₅ - C₂₅ Alkyl, und
   - mindestens eine Verbindung der allgemeinen Formel (II)

      **R²₂SiX₂** **(II),**
   wobei
   - X Alkoxy-, Aryloxy-, Acyloxy ist, und
   - R² ein nicht-hydrolysierbarer organischer Rest R² ist ausgewählt aus der Gruppe umfassend C₁-C₄ Alkyl.

Es wird somit eine schnelltrocknende, wasserhelle Zusammensetzung als Kantenversiegelungsmittel bereitgestellt, mit der ein Laminatböden hergestellt aus mit dieser Zusammensetzung kantenbeschichteten Trägerplatten sicher gegen das Eindringen von Wasser geschützt sind (ISO 4760 bzw. NALFA-Test); wobei diese Böden schwimmend als so genannte Click-Laminatböden verlegt werden.

Im Sinne der vorliegenden Erfindung ist unter einer wässrigen Zusammensetzung zu verstehen, dass die Zusammensetzung bevorzugt als wässrige Suspension vorliegt. In einer Ausführungsform enthält die wässrige Suspension neben Wasser auch ein organisches Lösemittel, insbesondere ein mit Wasser mischbares organisches Lösemittel. Bei dem organischen Lösemittel handelt es sich bevorzugt um ein Lösemittel mit einem Flammpunkt unterhalb von 30°C, bevorzugt unterhalb von 25°C, insbesondere bevorzugt unterhalb von 20°C. Geeignete organische Lösemittel sind Methanol, Ethanol, Propanol, wie Isopropanol oder n-Propanol, wobei Propanol besonders bevorzugt ist. Zu beachten ist, dass das organische Lösemittel während der Herstellung der Zusammensetzung zugegeben wird (exsitu) oder sich im Verlaufe der Herstellung der Zusammensetzung im Reaktionsgemisch durch Hydrolyse der Ausgangsstoffe bildet (in situ). So kann der Gewichtsanteil an Propanol in der finalen Zusammensetzung zwischen 5 und 20 Gew%, bevorzugt zwischen 10 und 15 Gew% betragen. Es hat sich z.B. gezeigt, dass bei Verwendung von Propanol eine schnelle Trocknung des Versiegelungsmittels nach Auftrag auf die Fügekanten der Trägerplatte erfolgt.

Die Wirkung der vorliegenden Zusammensetzung kann für eine Vielzahl von Verriegelungsprofilen realisiert werden. Die vorliegende Zusammensetzung wird insbesondere auf Fügekanten bzw. Fügeflächen von Profilflächen, von Fasen von Seitenkanten und/oder von V-Fugen von Trägerplatten, insbesondere für Fußbodenpaneele, aufgetragen.

Wie beschrieben, ist die vorliegende Zusammensetzung zur Versiegelung von Fügeflächen oder Fügekanten geeignet. Im Sinne der vorliegenden Erfindung ist unter Fügeflächen das Flächenpaar zu verstehen, an dem sich die zusammengefügten Paneele aneinander abstützen, um eine möglichst geschlossene (ebene) obere Fläche der verbundenen und verriegelten Paneele auszubilden. Demnach umfasst der technische Begriff der Fügefläche den Abschnitt der Seitenkanten die tatsächlich aneinandergepresst werden. Die Fügeflächen liegen direkt aneinander an, um die Oberfläche zu schließen. Die erste Fügefläche und zweite Fügefläche verlaufen gleichzeitig parallel zueinander, so dass im zusammengefügten Zustand der Fußbodenpaneele die Fügeflächen entlang ihrer gesamten Oberfläche aneinander anliegen und miteinander in Kontakt sind.

In einer bevorzugten Ausführungsform ist die vorliegende Zusammensetzung zur Versiegelung von vertikalen Fügekanten geeignet, wobei die vertikalen Fügekanten Teil einer lackierten oder unlackierten V-Fuge sein können.

Die in der vorliegenden Zusammensetzung verwendete Verbindung der allgemeinen Formel (I) weist aufgrund des längerkettigen Substituenten hydrophobe Eigenschaften auf, während die Verbindung der allgemeinen Formel (II) aufgrund des kurzkettigen Substituenten eher über hydrophile Eigenschaften verfügt.

Die hydrophobe Komponente der Formel (I) - gebildet z.B. aus den Alkylgruppen des Restes R¹ - bildet eine wasserabweisende Barriere auf. Auf diese Weise kann das Wasser nicht durch das Netzwerk der ausgebildeten Beschichtung diffundieren. Die hydrophile Komponente der Formel (II) ermöglicht zum einen, insbesondere über die (vorhandenen oder sich mittels Hydrolyse von z.B. Alkoxy-Gruppen bildenden) freien -OH Gruppen, eine Anbindung der Verbindung an die Holzfasern und zum anderen die Ausbildung eines Netzwerkes.

Bevorzugt ist die vorliegende Zusammensetzung frei von Mitteln, die eine Erhöhung der Viskosität bewirken. Insbesondere ist die Zusammensetzung frei von Polymeren (mit Ausnahme von Polyorganosiloxanen) und/oder Quellungsmitteln. Auch ist die vorliegende Zusammensetzung frei von Farben, z.B. frei von Fasenfarbe, die üblicherweise Farbpigmente wie Ruß, Eisenoxide, Titandioxid und/oder organische Pigmente enthalten kann.

Die vorliegende Zusammensetzung ist für beliebige Plattensysteme und Leimsysteme einsetzbar. So bewirkt die Zusammensetzung eine Quellreduzierung bei Holzfaserplatten unabhängig von den verwendeten Leimsystemen, unterschiedlicher Porosität oder Plattenstärke. So konnte die quellreduzierende Wirkung der vorliegenden Zusammensetzung bei HDF-Platten und Spanplatten mit Harnstoff-Formaldehyd-Leim (UF-Leim), Melamin-Harnstoff-Formaldehyd-Leim (MUF-Leim) oder Polyurethan-basierten-Leim (PMDI-Leim) nachgewiesen werden.

Die erfindungsgemäße Zusammensetzung bietet verschiedene Vorteile. So wird eine deutlich niedrigere Quellung der Kanten bewirkt, die Zusammensetzung penetriert oder migriert nicht in die Platten, die Zusammensetzung kann bei beliebigen Platten- und Leimsystemen eingesetzt werden und es sind nur relativ geringe Auftragsmengen notwendig. Des Weiteren kann die Zusammensetzung in einer schnelllaufenden Anlage (bis zu 350 m/min) auf die Fügekanten der Schmalseiten der Trägerplatten aufgebracht werden.

In einer Ausführungsform sind in der vorliegenden Zusammensetzung mindestens zwei Verbindungen der allgemeinen Formel (I) und mindestens eine Verbindung der allgemeinen Formel (II) enthalten; d.h. die Zusammensetzung umfasst
- mindestens zwei Verbindungen der allgemeinen Formel (I)

   **R¹SiX₃** **(I)**,
wobei
- X Alkoxy-, Aryloxy-, Acyloxy- ist, und
- R¹ ein organischer Rest ist ausgewählt aus der Gruppe umfassend C₅ - C₂₅ Alkyl, und
- mindestens eine Verbindung der allgemeinen Formel (II)

   **R²₂SiX₂** **(II),**
wobei
- X Alkoxy-, Aryloxy-, Acyloxy ist, und
- R² ein nicht-hydrolysierbarer organischer Rest R² ist ausgewählt aus der Gruppe umfassend C1-C4 Alkyl.

Der Rest X ist vorteilhafter ausgewählt aus einer Gruppe enthaltend enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy. Besonders bevorzugt ist der Rest X Methoxy oder Ethoxy

Der nicht-hydroliserbare organische R¹ der Verbindung der allgemeinen Formel (I) ist bevorzugt ausgewählt aus einer Gruppe umfassend C₅-C₂₀-Alkyl, insbesondere C₆-C₁₈-Alkyl, insbesondere bevorzugt C₈-C₁₆-Alkyl, bevorzugt Octyl, Nonyl, Decyl, Undecyl, Dodecyl Tridecyl, Tetradecyl, Pentadecyl, Hexadecyl, insbesondere bevorzugt Octyl und Hexadecyl.

Darüber hinaus kann der Rest R¹ mit weiteren hydrophoben Resten substituiert vorliegen.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

In einer bevorzugten Ausführungsform umfasst die Verbindung der Formel (I) eine der folgenden Varianten:
- R¹SiX₃ mit R¹ als C₆-C₁₂ Alkyl-Gruppe, bevorzugt Hexyl, Heptyl, Octyl, Nonyl, und mit X als Alkoxy, insbesondere Methoxy, Ethoxy, n-Propoxy oder i-Propoxy, z.B. Octyltriethoxysilan, oder
- R¹SiX₃ mit R¹ als C₁₄-C₁₈ Alkyl-Gruppe, bevorzugt Tetradecyl, Pentadecyl, Hexadecyl und mit X als Alkoxy, insbesondere Methoxy, Ethoxy, n-Propoxy oder i-Propoxy, z.B. Hexadecyltrimethoxysilan.

In einer bevorzugten Variante umfasst die vorliegende Zusammensetzung jeweils
- eine Silanverbindung der Formel R¹SiX₃ mit R¹ als C₆-C₁₂ Alkyl-Gruppe, bevorzugt Hexyl, Heptyl, Octyl, Nonyl, und mit X als Alkoxy, insbesondere Methoxy, Ethoxy, n-Propoxy oder i-Propoxy, z.B. Octyltriethoxysilan, und
- eine Silanverbindung der Formel R¹SiX₃ mit R¹ als C₁₄-C₁₈ Alkyl-Gruppe, bevorzugt Tetradecyl, Pentadecyl, Hexadecyl und mit X als Alkoxy, insbesondere Methoxy, Ethoxy, n-Propoxy oder i-Propoxy, z.B. Hexadecyltrimethoxysilan.

Die nicht-hydroliserbare organische R² der Verbindung der allgemeinen Formel (II) ist ausgewählt aus einer Gruppe umfassend C₁-C₃-Alkyl, bevorzugt Methyl, Ethyl, n-Propyl, Isopropyl. Diese können, wie der Rest R1 nicht-substituiert oder mit einer weiteren, bevorzugt hydrophilen, Gruppe substituiert sein.

In einer bevorzugten Ausführungsform umfasst die Verbindung der Formel (II) eine der folgenden Varianten:
- R²₂SiX₂ mit R² als C1-C3 Alkyl-Gruppe, bevorzugt Methyl, Ethyl, n-Propyl, Isopropyl, und mit X als Alkoxy, insbesondere Methoxy, Ethoxy, n-Propoxy oder i-Propoxy, z.B. Dimethyldimethoxysilan.

So kann in einer Variante die Zusammensetzung Octyltriethoxysilan und Hexadecyltrimethoxysilan als Verbindung der Formel (I) und Dimethyldimethoxysilan als Verbindung der Formel (II) enthalten.

In einer weiteren Ausführungsform sind die Verbindungen der allgemeinen Formel (I) in einer molaren Menge zwischen 0,08 - 0.2 mol, bevorzugt 0,1 - 0,15 mol, insbesondere bevorzugt 0,1-0,12 mol und die Verbindung der allgemeinen Formel (II) in einer molaren Menge zwischen 0,05 und 0,1 mol, bevorzugt zwischen 0,06 und 0,09 mol, besonders bevorzugt zwischen 0,07 und 0,08 mol in der Zusammensetzung enthalten.

Dabei kann sich der für die Verbindung der allgemeinen Verbindung (I) angegebene Bereich der molaren Menge auf eine Verbindung oder auf die Summe von zwei Verbindungen der allgemeinen Formel (I) beziehen

Das Verhältnis der Silanverbindungen der Formel (I) zu der Silanverbindung der Formel (II) liegt bevorzugt zwischen 1 : 0,5 und 1 : 2, insbesondere bevorzugt zwischen 1 : 0,75 und 1 : 1,5, ganz besonders bevorzugt zwischen 1 : 1 und 1 : 1,2.

In einer weiteren Ausführungsform umfasst die vorliegende Zusammensetzung mindestens eine Alkylmetallverbindung der allgemeinen Formel M(OR³)₄ mit M = Zr oder Ti und mit R³ = C1-C5 Alkyl, insbesondere C2, C3 oder C4-Alkyl. Besonders bevorzugt ist die Verwendung von mindestens einer Alkylzirkoniumverbindung der allgemeinen Formel Zr(OR³)₄ mit R³ = C1-C5 Alkyl, insbesondere C2, C3 oder C4-Alkyl. Besonders bevorzugt ist die Verwendung von Tetrapropylzirkonat. Die Alkylmetallverbindung dient als Kondensationskatalysator, der im Reaktionsverlauf einer Hydrolyse unterliegt, wobei es zur Freisetzung des entsprechenden niedermolekularen Alkohols, wie Ethanol, Propanol kommt.

Das Verhältnis der Alkylmetallverbindung der Silanerbindungen der Formel (I) und (II) liegt bei 1 : 30, bevorzugt bei 1 : 25.

In einer weiteren Ausführungsform kann die vorliegende Zusammensetzung anorganische Partikel, insbesondere SiO₂-, Al₂O₃-, ZrO₂ -, TiO₂-Partikel, bevorzugt insbesondere SiO₂-Partikel, z.B. als Nanopartikel, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden.

So kann die vorliegende Zusammensetzung in einer Ausführungsform folgende Kombinationen aufweisen:
- R¹SiX₃ mit R¹ als C₆-C₁₂ Alkyl-Gruppe, bevorzugt Hexyl, Heptyl, Octyl, Nonyl, und mit X als Alkoxy, insbesondere Methoxy, Ethoxy, n-Propoxy oder i-Propoxy, und/oder
- R¹SiX₃ mit R¹ als C₁₄-C₁₈ Alkyl-Gruppe, bevorzugt Pentadecyl, Hexadecyl und mit X als Alkoxy, insbesondere Methoxy, Ethoxy, n-Propoxy oder i-Propoxy, und
- R²₂SiX₂ mit R² als C1-C3 Alkyl-Gruppe, bevorzugt Methyl, Ethyl, n-Propyl, Isopropyl, und mit X als Alkoxy, insbesondere Methoxy, Ethoxy, n-Propoxy oder i-Propoxy, und
- mindestens eine Alkylzirkoniumverbindung der allgemeinen Formel Zr(OR³)₄ mit R³ = C1-C5 Alkyl, insbesondere C2, C3 oder C4, und
- SiO₂-Partikel.

Eine besonders bevorzugte Variante der vorliegenden Zusammensetzung umfasst Octyltriethoxysilan und Hexadecyltrimethoxysilan als Verbindung der Formel (I) und Dimethyldimethoxysilan als Verbindung der Formel (II) und SiO₂-Partikel.

In einer anderen Ausführungsform kann die vorliegende Zusammensetzung mindestens ein ein Polyorganosiloxan enthalten. Bevorzugt wird Polydimethylsiloxane (PDMS) der allgemeinen Formel (CH₃)₃SiO[(CH₃)₂SiO]ₙSi(CH₃)₃ verwendet, welches als wässrige Silikondispersion der Zusammensetzung zugegeben wird.

Somit kann die vorliegende Zusammensetzung auch folgende Kombinationen aufweisen:
- R¹SiX₃ mit R¹ als C₆-C₁₂ Alkyl-Gruppe, bevorzugt Hexyl, Heptyl, Octyl, Nonyl, und mit X als Alkoxy, insbesondere Methoxy, Ethoxy, n-Propoxy oder i-Propoxy, und/oder
- R¹SiX₃ mit R¹ als C₁₄-C₁₈ Alkyl-Gruppe, bevorzugt Pentadecyl, Hexadecyl und mit X als Alkoxy, insbesondere Methoxy, Ethoxy, n-Propoxy oder i-Propoxy, und
- R²₂SiX₂ mit R² als C1-C3 Alkyl-Gruppe, bevorzugt Methyl, Ethyl, n-Propyl, Isopropyl, und mit X als Alkoxy, insbesondere Methoxy, Ethoxy, n-Propoxy oder i-Propoxy, und
- mindestens eine Alkylzirkoniumverbindung der allgemeinen Formel Zr(OR³)₄ mit R³ = C1-C5 Alkyl, insbesondere C2, C3 oder C4, und
- mindestens ein Polyorganosiloxan.

Eine ganz besonders bevorzugte Variante der vorliegenden Zusammensetzung umfasst Octyltriethoxysilan und Hexadecyltrimethoxysilan als Verbindung der Formel (I) und Dimethyldimethoxysilan als Verbindung der Formel (II) und mindestens ein Polyorganosiloxan.

Die vorliegende Zusammensetzung ist gemäß einer ersten Ausführungsform in einem Verfahren umfassend die folgenden Schritte herstellbar:
- Bereitstellen einer Mischung aus mindestens einer Silanverbindung der allgemeinen Formel (I), bevorzugt von mindestens zwei Silanverbindungen der allgemeinen Formel (I), und mindestens einer Silanverbindung der allgemeinen Formel (II);
- Zugabe von mindestens einem Katalysator, insbesondere einer Säure, zu der Mischung aus mindestens einer Silanverbindung der Formel (I) und mindestens einer Silanverbindung der Formel (II) und Erwärmen der Mischung;
- optional Zugabe eines Wasser-Isopropanol Gemisches zu der Mischung,
- Abtrennen der während der Hydrolyse der Silanverbindungen gebildeten Alkohole, insbesondere Methanol und/oder Ethanol,
- Zugabe von mindestens einer Alkylmetallverbindung der allgemeinen Formel M(OR³)₄ zu der Mischung.

Wie bereits angedeutet, unterliegt die Alkylmetallverbindung im Reaktionsverlauf einer Hydrolyse, wobei es zur in situ Freisetzung des entsprechenden niedermolekularen Alkohols, wie z.B. Propanol, kommt. So kann der Gewichtsanteil an Propanol in der finalen Zusammensetzung zwischen 5 und 20 Gew%, bevorzugt zwischen 10 und 15 Gew% (bezogen auf die Gesamtmenge der Zusammensetzung) betragen.

Aufgrund des geringen Siedepunktes und Flammpunktes verflüchtigen diese durch Hydrolyse freigesetzten Alkohole nach Auftrag der Zusammensetzung auf die Fügekanten der Trägerplatte schnell.

Wird ein Wasser-Isopropanol Gemisch der Mischung zugegeben, so beträgt das Verhältnis von Wasser : Isopropanol 10 : 90, insbesondere 20 : 80, insbesondere bevorzugt 30 : 70.

Wie oben ebenfalls ausgeführt, können der Mischung im Verlaufe des Verfahrens anorganische Partikel, wie SiO₂ Partikel, und/oder ein Polyorganosiloxan zugegeben werden. In dem Fall, dass anorganische Partikel der Zusammensetzung zugemischt werden, werden die anorganischen Partikel bevorzugt in einer Menge zwischen 0,1 bis 10 Gew%, bevorzugt 0,5 bis 5 Gew%, insbesondere bevorzugt zwischen 1 bis 3 Gew% in verwendet. In dieser Ausführungsform kann während der Herstellung ein Wasser-Isopropanol-Gemisch zugegeben werden.

In dem Fall, dass Polyorganosiloxan der Zusammensetzung zugemischt wird, wird das Polyorganosiloxan bevorzugt in einer Menge zwischen 5 bis 30 Gew%, bevorzugt 10 bis 30 Gew%, insbesondere bevorzugt zwischen 20 bis 30 Gew% (bezogen auf die Gesamtmenge der Zusammensetzung) verwendet. In dieser Ausführungsform wird bevorzugt während der Herstellung kein Wasser-Isopropanol-Gemisch zugegeben.

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Wie bereits oben erwähnt, kann die vorliegende Zusammensetzung zur Beschichtung bzw. Versiegelung von Fügekanten von Trägerplatten verwendet werden. Die Fügekanten können dabei als gerade Kanten oder in versiegelten und/oder bereits beschichteten V-Fugen oder Fasen vorliegen.

Die Aufgabe der vorliegenden Erfindung wird daher ebenfalls durch eine Trägerplatte gelöste, deren Kanten mit der vorliegenden Zusammensetzung beschichtet sind.

Geeignete Trägerplatten sind Holzwerkstoffplatten, insbesondere WPC (Wood-Plastic-Composite), Sperrholzplatte, Spanplatte, OSB (Oriented Strand Board), HDF (High Density Fiber)- oder MDF (Middle Density Fiber)-Platten. Es können aber auch Trägerplatten aus Kunststoff oder Mineralfaserstoff, wie SPC (Stone Polymer Composite), Gipskarton oder Zementfaserplatten, in Frage kommen. Besonders bevorzugte Holzwerkstoffplatten sind Spanplatten und HDF.

Holzwerkstoffplatten, wie Holzspan- und Holzfaserplatten wie z.B. MDF-, HDF-Platten, werden aus Holzspänen oder Holzfasern hergestellt, die durch Zerspanung der Holzhackschnitzel in einem Zerspaner oder ein Zerfaserungsprozess der Holzhackschnitzel in einem Refiner gewonnen werden. Die mit in Holzfaserplatten verwendeten Holzfasern weisen eine Länge zwischen 1,5 mm und 20 mm und eine Dicke zwischen 0,05 mm und 1 mm auf. Die Größe von in Holzspanplatten verwendeten Holzspänen ist abhängig davon, ob sie in der Deck- oder Mittelschicht eingesetzt werden. In der Mittelschicht beginnen die Späne bei > 0,125 mm Siebweite, in der Deckschicht bei > 0,8 - 1,0 mm.

Die vorliegenden Holzwerkstoffplatten können verschiedene Bindemittelsysteme aufweisen, die als Bindemittel mit den Holzfasern vermischt und verpresst werden. Bevorzugte Bindemittelsysteme sind: Formaldehyd-Harze, wie Harnstoff-Formaldehyd-Harze, MelaminFormaldehyd-Harze, Melamin-Harnstoff-Formaldehyd-Harze; Polyurethane, bevorzugt auf der Basis von Polydiphenylmethandiisocyanat (PMDI), Epoxidharz oder Polyesterharze.

Die Zusammensetzung kann auf die Fügekanten, Profile und/oder Fasen der Holzwerkstoffplatte z.B. mittels Sprühen, Walzen oder unter Verwendung eines Vakuumaten aufgetragen werden, und anschließend getrocknet (Lufttrocknung oder thermische Trocknung).

Die Geschwindigkeit einer entsprechenden Produktionsanlage, d.h. einer Anlage zum Auftragen eines Versiegelungsmittels auf eine Seitenkante, kann zwischen 200 und 400 m/min, bevorzugt zwischen 250 und 380 m/min, insbesondere bevorzugt zwischen 300 und 350 m/min betragen. In einer bevorzugten Ausführungsform beträgt die Geschwindigkeit der Anlage bis zu 350 m /min in Längsrichtung und bis zu 50 m/ min in Querrichtung.

Die Breite der mit dem Versiegelungsmittel zu beschichtenden Seitenkante liegt zwischen 2,5 und 3,5 mm, bevorzugt bei 3 mm.

In einer Ausführungsform weist das mindestens eine Versiegelungsmittel einen Feststoffgehalt zwischen 30 und 100 Gew%, bevorzugt zwischen 50 und 100 Gew%, insbesondere zwischen 70 und 100 Gew% auf. Das Versiegelungsmittel liegt bevorzugt als Suspension, insbesondere als wässrige Suspension vor. In einer bevorzugten Ausführungsform werden wässrige Suspensionen mit einem Feststoffgehalt von 50-70 Gew% und einem wässrigen Anteil von 30-50 Gew% verwendet. Der wässrige Anteil kann dabei Wasser und Isopropanol umfassen.

In einer weitergehenden Ausführungsform wird das mindestens eine Versiegelungsmittel in einer Menge zwischen 0,5 g/Ifm und 3,0 g fl/lfm, bevorzugt zwischen 1,0 und 2,5 g fl /Ifm, insbesondere bevorzugt zwischen 1,5 und 2,3 g fl/lfm, z.B. bevorzugt von 2,0 g fl/lfm auf die Seitenkante aufgetragen wird.

Die Schichtdicke der Zusammensetzung auf der Plattenkante und/oder -fase kann in einem Bereich zwischen 10 und 50 µm, bevorzugt zwischen 20 und 40 µm liegen.

Im Falle von der Verwendung der Trägerplatten als Fußbodenpaneele werden die Trägerplatten mit einer Feder-Nut-Verriegelung versehen und zum schwimmenden Verlegen verwendet. Hierbei können verschiedene Verriegelungssysteme zum Einsatz kommen, die eine Verlegung der Paneele unter Anwendung von folgenden Mechanismen ermöglichen:
- angle-snap (Einwinkeln längs und horizontal Zusammenschlagen quer)
- angle-angle (Einwinkeln längs und quer)
- angle-fold down (Einwinkeln längs und Absenken quer)

Als bevorzugte Verriegelungssysteme haben sich die letzteren angle-fold down Systeme erwiesen, die ein einfaches und sicheres Verlegen ermöglichen. Insbesondere sind die Systeme bekannt unter dem Handelsnamen 5G (Välinge) und UDX (Unilin) zu nennen. Beide Systeme weisen in den Seitenkanten eine spezifische Feder-Nut-Struktur auf, wobei das 5G System eine zusätzliche Kunststoffkomponente verfügt, die in die Nut eingebracht ist. Das UDX System verzichtet auf diese zusätzliche Kunststoffkomponente.

Wie in den Ausführungsbeispielen gezeigt, bewirken diese Verriegelungssysteme (ohne eine zusätzliche Versiegelung) keinen Schutz gegen Wasserdurchlauf. Insbesondere das 5G System ist hier besonders anfällig. Wird das vorliegende Versiegelungsmittel vor der Verriegelung auf die Seitenkanten aufgetragen, ist der Wasserdurchlauf entlang der Verriegelungslinie gestoppt und ein effektiver Schutz gegen das Eindringen von Wasser ist gegeben.

Ein entsprechendes Verlegeverfahren umfasst dabei das Verlegen eines ersten Fußbodenpaneels, und Anfügen eines zweiten Fußbodenpaneels an das erste Fußbodenpaneel, wobei die Feder des zweiten Fußbodenpaneels in die Nut des ersten Fußbodenpaneels eingefügt wird.

Die Erfindung wird nachfolgend unter Bezugnahme an Ausführungsbeispielen näher erläutert. **Ausführungsbeispiel 1:** Herstellung einer ersten Variante der erfindungsgemäßen Zusammensetzung V3

| | |
|---|---|
| 12,4 g | Ocytltriethoxysilan |
| 3,7 g | Dimethoxydimethylsilan |
| 6,9 g | Hexadecyltrimethoxysilan |

werden vorgelegt und auf 40 °C erwärmt. Anschließend erfolgt eine Zugabe von 4,57 g H₂O und 1,3 g H₂SO₄ (37%) und es wird für weitere 60 Minuten bei 40 °C gerührt. Anschließend werden 14,48 g Wasser-Isopropanol-Gemisch hinzugegeben und der bei der Hydrolyse entstandene Alkohol (Ethanol bzw. Methanol) über eine Rotationsverdampfer entfernt. In einem weiteren Schritt erfolgt die Zugabe von 4,5 g Tetrapropylzirkonat sowie 1,2 g nanoskaliges SiO₂ (Bsp. Aerosil R819) unter Rühren bei Raumtemperatur.

**Ausführungsbeispiel 2:** Herstellung einer ersten Variante der erfindungsgemäßen Zusammensetzung V5

| | |
|---|---|
| 12,4 g | Ocytltriethoxysilan |
| 3,7 g | Dimethoxydimethylsilan |
| 6,9 g | Hexadecyltrimethoxysilan |

werden vorgelegt und auf 40 °C erwärmt. Anschließend erfolgt eine Zugabe von 4,57 g H₂O und 1,3 g H₂SO₄ (37%) und es wird für weitere 60 Minuten bei 40 °C gerührt. Anschließend werden 28,49 g einer wässrigen Silikondispersion (Bsp. Korasilon TXP) hinzugegeben und der bei der Hydrolyse entstandene Alkohol (Ethanol bzw. Methanol) über eine Rotationsverdampfer entfernt. In einem weiteren Schritt erfolgt die Zugabe von 4,5 g Tetrapropylzirkonat unter Rühren bei Raumtemperatur.

### Ausführungsbeispiel 3: HDF-Platte

Die Fügekanten einer 8 mm HDF mit einer Rohdichte von ca. 850 kg/m³, die mit einem Harnstoff-Formaldehyd-Leim in einer üblichen Menge hergestellt worden war, werden jeweils mit einer erfindungsgemäßen Zusammensetzung V3 (gemäß Ausführungsbeispiel 1) und V5 (gemäß Ausführungsbeispiel 2) in einer Anlage mit einer Beschichtungsgeschwindigkeit bis 350m/min längs, quer bis 50m/min mittels Sprüh-, Walz-, Transfer-, Vakuumverfahren und einer Auftragsmenge von bis 2g/Laufmeter Kante beschichtet und anschließend luftgetrocknet (thermische Trocknung auch möglich).

Die kantenversiegelten HDF-Platten (V3, V5) werden anschließend zusammengefügt und einem NALFA-Test (DIN EN ISO 4760) unterzogen. Als Nullprobe (V0) werden unversiegelte HDF-Platten verwendet. Die Ergebnisse des NALFA-Tests sind in der folgenden Tabelle 1 zusammengefasst:

**Tabelle 1**

| Variante | Wasserdurchlauf | Beschreibung |
|---|---|---|
| V0 | 10 | 10 von 10 durchgelaufen, keine Quellwerte |
| V3 | 0 | 10 von 10 dicht und unter 0,1 mm Aufquellung |
| V5 | 0 | 10 von 10 dicht und unter 0,2 mm Aufquellung |

Die Versuche zeigen, dass ein deutlicher Unterschied zwischen den unbehandelten Paneelen (V0) und den mit V3 oder V5 kantenversiegelten Paneelen besteht. Die behandelten Paneele bestehen den NALFA-Test zu 100% sowohl mit den max. geforderten Quellwerten von < 0,3 mm und ohne dass Wasser durch die Verbindung läuft. Jede Variante würde mit 10 Prüfkörpern getestet

### Ausführungsbeispiel 4: Spanplatte

Die Fügekanten einer 8 mm Spanplatte wurden jeweils mit einer erfindungsgemäßen Zusammensetzung V3 (gemäß Ausführungsbeispiel 1) in einer Anlage mit einer Beschichtungsgeschwindigkeit bis 350m/min längs, quer bis 50m/min mittels Sprüh-, Walz-, Transfer-, Vakuumverfahren und einer Auftragsmenge von bis 2g/Laufmeter Kante beschichtet und anschließend luftgetrocknet (thermische Trocknung auch möglich).

Je vier Proben der kantenversiegelten Span-Platten (V3) wurden anschließend zusammengefügt und einem NALFA-Test (DIN EN ISO 4760) unterzogen. Als Nullprobe (V0) werden unversiegelte HDF-Platten verwendet. Die Ergebnisse des NALFA-Tests sind in der folgenden Tabelle 2 zusammengefasst:

| **Dauer** | **V0-1** | **V3-1** | **V3-2** | **V3-3** | **V3-4** |
|---|---|---|---|---|---|
| 0h | abgebrochen | trocken | trocken | trocken | trocken |
| 18,75h | X | trocken | trocken | trocken | trocken |
| 48h | X | trocken | trocken | trocken | trocken |
| 72h | X | trocken | trocken | trocken | trocken |
| 144h | X | trocken | trocken | trocken | trocken |
| 240h | X | | trocken | trocken | trocken |

Die Versuche zeigen, dass ein deutlicher Unterschied zwischen den unbehandelten Paneelen (V0) und den mit V3 kantenversiegelten Paneelen besteht. Die behandelten Paneele bestehen den NALFA-Test zu 100% mit der Forderung, dass kein Wasser durch die Verbindung läuft. Da die unbehandelte Probe unmittelbar nach der Befüllung leergelaufen ist, wurde nur die behandelten Variante mit 4 Prüfkörpern getestet. Die Quellwerte wurden nicht gemessen, aber die optische Bewertung zeigt keine Auffälligkeiten.

### Ausführungsbeispiel 5: HDF und Spanplatte jeweils mit verschiedenen Verriegelungssystem

Die Fügekanten einer 8 mm Spanplatte und einer 8 mm HDF mit einer Rohdichte von ca. 850 kg/m³, wurden jeweils mit den erfindungsgemäßen Zusammensetzungen V3 (gemäß Ausführungsbeispiel 1) und V5 (gemäß Ausführungsbeispiel 2) beschichtet. Die beschichteten Paneele wurden anschließend unter Verwendung der Verriegelungssysteme 5G (gestaltet nach einer Lizenz von Välinge) und UDX (gestaltet nach einer Lizenz von Unilin) zusammengefügt.

Anschließend wurde der Versuchsaufbau im Labor SKDE in Anlehnung an ISO 4760 durchgeführt. Als Nullproben (V0) werden jeweils unversiegelte HDF-Platten und Spanplatten verwendet. Die Ergebnisse des NALFA-Tests sind in der folgenden Tabelle 3 zusammengefasst:

**Tabelle 3**

| **Trägerplatte** | **Verriegelung** | **Versiegelungsmittel** | **Wasserdurchlauf** | **Quellwert nach 24 h** | **Quellwert nach 48h und Rücktrocknung** |
|---|---|---|---|---|---|
| HDF | 5G | V0 (keine) | ja | 1,06 | 1,04 |
| HDF | 5G | V0 (keine) | ja | 0,97 | 0,90 |
| | | | | | |
| HDF | 5G | V3 | nein | 0,34 | 0,09 |
| HDF | 5G | V3 | nein | 0,32 | 0,15 |
| HDF | 5G | V3 | nein | 0,20 | 0,10 |
| | | | | | |
| HDF | 5G | V5 | nein | 0,16 | 0,05 |
| HDF | 5G | V5 | nein | 0,18 | 0,08 |
| HDF | 5G | V5 | nein | 0,18 | 0,11 |
| HDF | 5G | V5 | nein | 0,20 | 0,09 |
| | | | | | |
| Spanplatte | 5G | V0 (keine) | ja | 0,93 | 0,79 |
| | | | | | |
| Spanplatte | 5G | V3 | nein | 0,26 | 0,12 |
| Spanplatte | 5G | V3 | nein | 0,27 | 0,01 |
| Spanplatte | 5G | V3 | nein | 0,41 | 0,13 |
| | | | | | |
| Spanplatte | 5G | V5 | nein | 0,32 | 0,22 |
| Spanplatte | 5G | V5 | nein | 0,28 | 0,23 |
| Spanplatte | 5G | V5 | nein | 0,38 | 0,23 |
| | | | | | |
| Spanplatte | UDX | V0 (keine) | gering | 0,40 | 0,17 |
| | | | | | |
| Spanplatte | UDX | V5 | nein | 0,27 | 0,07 |
| Spanplatte | UDX | V5 | nein | 0,28 | 0,11 |

Wie in den Ausführungsbeispielen der Tabelle 3 gezeigt, bewirkt das Verriegelungssystem 5G ohne eine zusätzliche Versiegelung im Falle von HDFA und Spanplatten keinen Schutz gegen Wasserdurchlauf. Wird das Versiegelungsmittel V3 oder V5 vor der Verriegelung auf die Seitenkanten von HFD oder Spanplatte aufgetragen, ist kein Wasserdurchlauf entlang der Verriegelungslinie nachweisbar, so dass ein effektiver Schutz gegen das Eindringen von Wasser gegeben ist.

Im Fall des Verriegelungssystem UDX ist zwar nur ein geringer Wasserdurchlauf erkennbar, jedoch bewirkt auch hier der Auftrag des Versiegelungsmittels V5 eine Verbesserung der Kantenquellung.

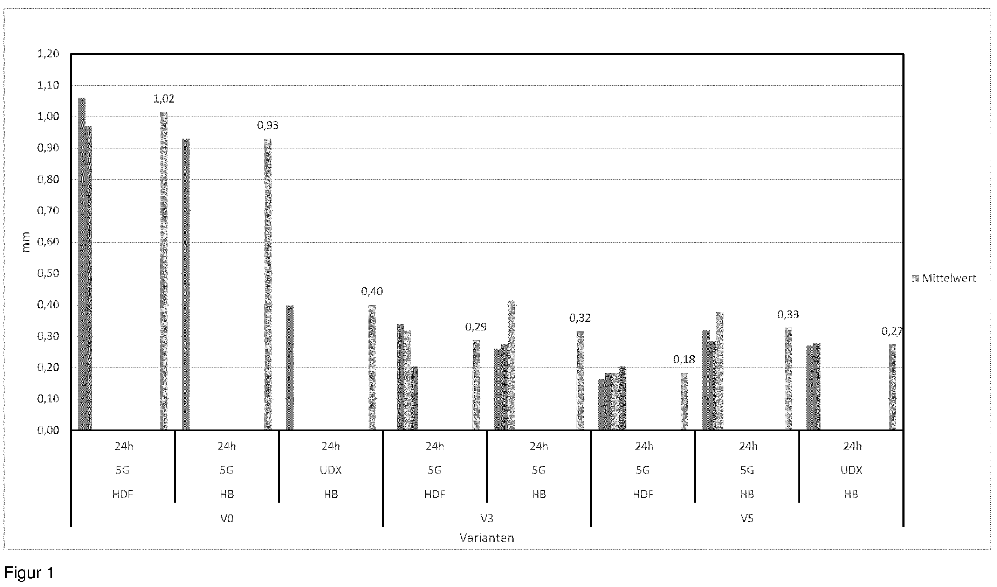

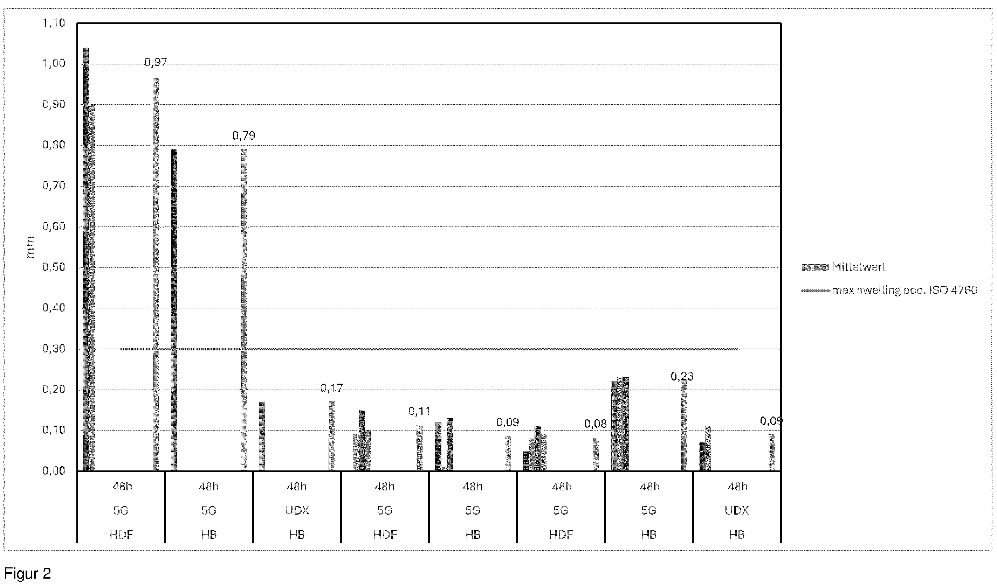

Die in Tabelle 3 angeführten Ergebnisse sind in den Diagrammen der Figuren 1 und 2 veranschaulicht dargestellt. Das Diagramm der Figur 1 zeigt die Quellwerte (und deren Mittelwert) nach 24 h für die vermessenen Proben.

Das Diagramm der Figur 2 zeigt die Quellwerte (und deren Mittelwert) nach 48 h und Rücktrocknung für die vermessenen Proben. Zu erkennen ist, dass die Quellung bei allen mit dem Versiegelungsmittel behandelten Proben unter den normativ geforderten 0,3 mm liegt.

## Patentansprüche

1. Verwendung einer Zusammensetzung zur Versiegelung und Beschichtung von Fügekanten von mindestens einer Holzwerkstoffplatte umfassend
- mindestens zwei Verbindungen der allgemeinen Formel (I)
**R¹SiX₃** **(I),**
wobei
- X Alkoxy-, Aryloxy-, Acyloxy- ist, und
- R¹ ein organischer Rest ist ausgewählt aus der Gruppe umfassend C₅ - C₂₅ Alkyl, und
- mindestens eine Verbindung der allgemeinen Formel (II)
**R²₂SiX₂** **(II),**
wobei
- X Alkoxy-, Aryloxy-, Acyloxy ist,
- R² ein nicht-hydrolysierbarer organischer Rest R² ist ausgewählt aus der Gruppe umfassend C1-C4 Alkyl.

2. Verwendung einer Zusammensetzung nach einem der vorhergehenden Ansprüche, **dadurch gekennzeichnet, dass** X ausgewählt ist aus einer Gruppe enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy.

3. Verwendung einer Zusammensetzung nach einem der vorhergehenden Ansprüche, **dadurch gekennzeichnet, dass** der nicht-hydroliserbare organische R¹ ausgewählt ist aus einer Gruppe umfassend C₅-C₂₀-Alkyl, insbesondere C₆-C₁₈-Alkyl, insbesondere bevorzugt C₈-C₁₆-Alkyl, bevorzugt Octyl, Nonyl, Decyl, Undecyl, Dodecyl Tridecyl, Tetradecyl, Pentadecyl, Hexadecyl, insbesondere bevorzugt Octyl und Hexadecyl.

4. Verwendung einer Zusammensetzung nach einem der vorhergehenden Ansprüche, **dadurch gekennzeichnet, dass** die Verbindung der Formel (I) jeweils eine der folgenden Formeln umfasst
- R¹SiX₃ mit R¹ als C₆-C₁₂ Alkyl-Gruppe, bevorzugt Hexyl, Heptyl, Octyl, Nonyl, und mit X als Alkoxy, insbesondere Methoxy, Ethoxy, n-Propoxy oder i-Propoxy, und
- R¹SiX₃ mit R¹ als C₁₄-C₁₈ Alkyl-Gruppe, bevorzugt Pentadecyl, Hexadecyl und mit X als Alkoxy, insbesondere Methoxy, Ethoxy, n-Propoxy oder i-Propoxy.

5. Verwendung einer Zusammensetzung nach einem der vorhergehenden Ansprüche, **dadurch gekennzeichnet, dass** der nicht-hydroliserbare organische R² ausgewählt ist aus einer Gruppe umfassend C₁-C₃-Alkyl, bevorzugt Methyl, Ethyl, n-Propyl, Isopropyl.

6. Verwendung einer Zusammensetzung nach einem der vorhergehenden Ansprüche, **dadurch gekennzeichnet, dass** die Verbindung der Formel (II) eine der folgenden Formeln umfasst:
- R²₂SiX₂ mit R² als C1-C3 Alkyl-Gruppe, bevorzugt Methyl, Ethyl, n-Propyl, Isopropyl, und mit X als Alkoxy, insbesondere Methoxy, Ethoxy, n-Propoxy oder i-Propoxy.

7. Verwendung einer Zusammensetzung nach einem der vorhergehenden Ansprüche, **gekennzeichnet durch** mindestens eine Alkylmetallverbindung der allgemeinen Formel M(OR³)₄ mit M = Zr oder Ti und mit R³ = C1-C5 Alkyl, insbesondere C2, C3 oder C4-Alkyl.

8. Verwendung einer Zusammensetzung nach Anspruch 7, **gekennzeichnet durch** mindestens eine Alkylzirkoniumlverbindung der allgemeinen Formel Zr(OR³)₄ mit R³ = C1-C5 Alkyl, insbesondere C2, C3 oder C4-Alkyl.

9. Verwendung einer Zusammensetzung nach einem der vorhergehenden Ansprüche, **dadurch gekennzeichnet, dass** anorganische Partikel, insbesondere SiO₂-, Al₂O₃-, ZrO₂-, TiO₂-Partikel, bevorzugt insbesondere SiO₂-Partikel, enthalten sein können.

10. Verwendung einer Zusammensetzung nach einem der vorhergehenden Ansprüche, **dadurch gekennzeichnet, dass** mindestens ein Polyorganosiloxan enthalten ist.

11. Verwendung einer Zusammensetzung nach einem der vorhergehenden Ansprüche, **dadurch gekennzeichnet, dass** die Fügekanten als gerade Kanten oder in versiegelten und/oder bereits beschichteten V-Fugen oder Fasen vorliegen.

12. Holzwerkstoffplatte umfassend mindestens eine auf eine Kante und/oder Fase, insbesondere auf einer Fügekant, aufgebrachte gemäß einem der Ansprüche 1-10 verwendete Zusammensetzung.

13. Holzwerkstoffplatte nach Anspruch 12, **dadurch gekennzeichnet, dass** die Holzwerkstoffplatte eine WPC (Wood-Plastic-Composite), Sperrholzplatte, Spanplatte, OSB (Oriented Strand Board), HDF (High Density Fiber)- oder MDF (Middle Density Fiber)-Platte ist.
